# EUROPEAN PATENT SPECIFICATION

(11) **EP 2 871 096 B1**
(45) Date of publication and mention of the grant of the patent: **28.12.2016**
(21) Application number: 13748098.4
(22) Date of filing: 09.07.2013
(51) Int. Cl.: B60Q 7/00

(54) **WARNING TRIANGLE SIGN**
WARNDREIECK
PANNEAU ROUTIER "TRIANGLE D'AVERTISSEMENT"

(30) Priority: 09.07.2012 RU 2012128429
(43) Date of publication of application: 13.05.2015
(73) Proprietor: Bartuli, Evgeny Arturovich, Kolomna, Moscow region 140404 (RU); Merkusev, Gennadij, 73257 Köngen (DE)
(72) Inventor: BARTULI, Evgeny Arturovich, Kolomna, Moscow region 140404 (RU)
(74) Representative: Sloboshanin, Sergej
(86) International application number: PCT/IB2013/001551
(87) International publication number: WO 2014/009803

(56) References cited:
- DE-A1- 2 010 563
- DE-A1-102004 054 356
- DE-U- 7 501 709
- DE-U1- 20 311 869
- FR-A- 1 552 251
- GB-A- 961 401
- GB-A- 2 192 017
- US-A- 3 385 551

## Description

The invention relates to road signal technology, particularly to provisional signalling appliances, which have to be carried in a vehicle and be placed on a thorough-fare part of a road for signalling in daytime and nighttime the presence of a vehicle that has come to a halt. A foldable three-dimensional basis with traffic signs is known (see utility model RU 114964, published April 20, 2012), which is chosen as the most pertinent prior art. In its folded-out state the foldable three-dimensional basis with the traffic signs forms a pyramid with ribs in the shape of rods, connected with each other at least by their upper ends, and with faces in the shape of triangular side walls between the rods. The three-dimensional basis is formed by an elastic sheath and rods connected to the latter, while the traffic signs on the side walls are made of light-reflecting elastic ribbons attached to them, forming traffic signs of triangular shape for an accidental halt when the three-dimensional basis is in its unfolded state. The foldable three-dimensional basis forms a triangular pyramid in its unfolded state. The rods are made of metal or wood. The rods are connected to each other by the upper ends by means of the elastic sheath or by means of a wire connector. The elastic sheath is made of cloth or non-cloth material. At the top of the elastic sheath a loop-shaped elastic handle is attached.

The shortcoming of this construction is that it is not sufficiently reliable and compact.

A warning triangle formed as a tripod according to the preamble of claim 1 is known from DE102004054356A1.

The technical result, the achievement of which is the aim of the present invention, is the creation of a compact, reliable and safe construction.

Said technical result is achieved as follows: An "advance-warning triangle" sign is formed as a tripod which in its unfolded state forms a pyramid with ribs connected to each other at least by their upper ends and framed by an elastic sheath formed as light-reflecting elastic ribbons, which in the unfolded state of the pyramid form traffic signs of a triangular shape.

The ribs form telescopic legs with a hinged connection to each other. The light-reflecting elastic ribbons are attached to the legs on two lateral sides and form a polymer cloth strip formed as a red rim consisting of an outer light-reflecting band and an inner fluorescent band, surrounding a hollow centre on three sides and having the shape of concentric equilateral triangles. All these features render it possible to reduce the dimensions of the construction in its folded state, giving it the required compactness.

On the front side, rails are attached to the legs which can be bent in a vertical plane and fixed in that position, the rails being attached to the legs by their lower portion, while at their upper portion the rails are connected to the legs by a fixing mechanism. An elastic polymer cloth strip is attached to the rails, formed as a red rim consisting of an outer light-reflecting band and an inner fluorescent band, surrounding the hollow centre on three sides and having the shape of concentric equilateral triangles. All these features make the construction fulfil the safety requirements stipulated for "advance-warning triangle" signs.

The "advance-warning triangle" sign is provided with a fixing strut for a fixation of the completely unfolded legs. Thus the legs can be reliably fixed in their unfolded state.

The foldable tripod is made of light metal, or polymer, or a combination of light metal and polymer. The legs are covered with a light porous rubberised material on the outside. This makes the sign lightweight and safe for a vehicle in case of a collision with it. The surface of the legs of the foldable tripod is covered with a light-reflecting material. This makes the sign more visible and enhances its safety and information value.

The light-reflecting band is an elastic high-intensive light-reflecting polymer membrane with a cellular (for instance "honeycomb") structure. All these features render it possible to reflect light with the required intensity.

The legs of the foldable tripod are provided with support stands at their lower portion. All these features render it possible to position the sign reliably when in use.

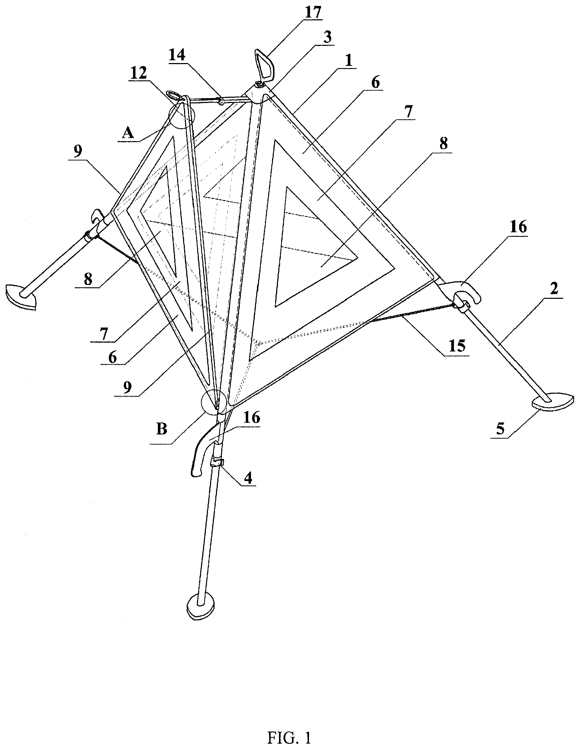

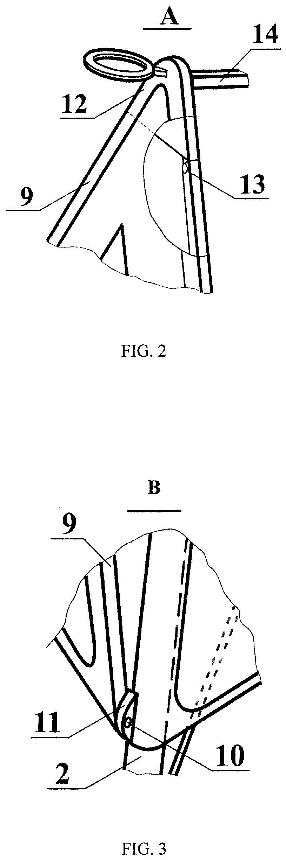

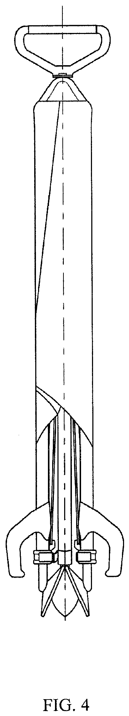

Fig. 1 shows the "advance-warning triangle" sign in a general view, Fig. 2 shows the assembly A from Fig. 1, Fig. 3 shows the assembly B from Fig. 1, Fig. 4 shows the "advance-warning triangle" sign in its folded state.

The "advance-warning triangle" sign forms a foldable tripod 1 consisting of legs 2 connected to each other at the upper portion of the construction with the aid of a hinge 3. The legs 2 of the tripod form a hollow telescopic construction consisting of several hollow sections connected by a fixing element 4. Different known mechanism constructions can be used as the fixing element 4 of the sections of the legs 2, for instance a bayonet joint or an eccentric clamp or a sleeve joint or a thread joint. At the lower ends of the telescopic legs 2 there are hinged support stands 5. The lower portion of the support stands 5 is formed to provide a reliable contact with the road surface.

To the legs 2 of the tripod 1 an elastic polymer cloth strip is attached in a stationary way from two lateral sides, which is formed as a red rim consisting of an outer light-reflecting band 6 and an inner fluorescent band 7 surrounding the hollow centre 8 from three sides. The hollow centre 8, the fluorescent band 7 and the light-reflecting band 6 are shaped as concentric equilateral triangles.

Rails 9 are attached on the front side of the foldable tripod 1 on the legs 2. The rails 9 are attached to the legs 2 by their lower portion so that they can be bent in a vertical plane perpendicular to the plane of the road. To this end, the rails have axles 10, while semicircular eyes 11 having an aperture, into which the axles 10 of the rails 9 are inserted, are formed on the legs 2. The rails 9 are connected to each other by their upper ends by means of a joint with a member the shape of an inverted v, the angle 12, with the aid of hinges 13. The angle 12 is connected to the legs 2 by a foldable fixing mechanism 14.

An elastic polymer cloth strip is also attached to the rails 9, which is formed as a red rim consisting of an outer light-reflecting band 6 and an inner fluorescent band 7 surrounding a hollow centre 8 from three sides. The hollow centre 8, the fluorescent band 7 and the light-reflecting band 6 are shaped as concentric equilateral triangles.

For a fixation of the completely unfolded legs of the tripod in its operational state, a fixing strut 15 is provided. To ease the folding and unfolding there are handles 16 on the legs.

At the top of the construction there is a gripping handle 17 for moving the item.

The foldable tripod 1 is manufactured from light metal (for instance: aluminium and magnesium alloys) or polymers (for instance: carbon, basalt fibre, polypropylene) or a combination of one and the other. The legs 2 are covered with light porous rubberised material on the outside. The legs of the foldable tripod are covered with light-reflecting material. The surface of the legs 2 of the foldable tripod are covered with light-reflecting material.

The width of the light-reflecting band 6 is 25-50 mm and is equal on all three sides. The light-reflecting band 6 is an elastic high-intensive light-reflecting polymer membrane with a cellular (for instance "honeycomb") structure. This material has the highest coefficient of light intensity, which significantly exceeds that of other membranes, and the widest indicatrix.

The minimum area of each of the three sides of the fluorescent band 7 in its operational state is 315 cm². The fluorescent material of the light-reflecting band 7 has a luminosity coefficient, including the luminosity caused by reflection and fluorescence, of at least 30%. The fluorescent material 7 is coloured through or forms a coating applied on the surface of the elastic polymer cloth strip.

The apparatus works as follows.

To render it operational, the legs 2 of the foldable tripod 1 are unfolded with the aid of the handles 6, whereby the tripod 1 takes the shape of a triangular pyramid. The rails 9 are thereby also unfolded in their lower portion together with the legs 2. The polymer cloth strip attached to the legs 2 and the rails 9 is stretched and takes the shape of a triangle. The legs 2 are fixed with the aid of the fixing struts 13.

In a position of use on the road, the frontal face side of the advance-warning triangle must be positioned vertically, perpendicularly to the plane of the road - this is a requirement of GOST R 41.27-2001 (UNECE (United Nations Economic Council for Europe) Regulation R 27). To bring it into that position, the rails 9 are turned away from the legs 2 until they reach a vertical position, which is regulated with the aid of the foldable fixing mechanism 12.

The "advance-warning triangle" sign can be manufactured with existing technical means on existing equipment.

## Claims

1. "Advance-warning triangle" sign formed as a tripod (1), having two lateral sides and one front side, which in its unfolded state forms a pyramid with ribs connected to each other at least by their upper ends and framed by an elastic sheath formed as light-reflecting elastic ribbons, which in the unfolded state of the pyramid form traffic signs of a triangular shape, wherein the ribs form telescopic legs (2) with a hinged connection to each other, wherein for a fixation of the completely unfolded legs (2) it is provided with a fixing strut (15), **characterized in that**
- the light-reflecting elastic ribbons are attached to the legs (2) on two lateral sides of the tripod (1) and form a red polymer cloth rim consisting of an outer light-reflecting band (6) and an inner fluorescent band (7) surrounding a hollow centre (8) on three sides and having the shape of concentric equilateral triangles,
- on the front side of the tripod (1), rails (9) are attached to the legs (2) which can be bent in a vertical plane perpendicular to the plane of the road and fixed **in that** position, wherein the rails (9) are attached to the legs (2) by their lower portion,
- the rails (9) are connected to each other by their upper ends, and at their upper portion the rails (9) are connected to the legs (2) by a fixing mechanism (14),
- an elastic polymer cloth strip is attached to the rails, formed as a red rim consisting of an outer light-reflecting band (6) and an inner fluorescent band (7), surrounding the hollow centre (8) on three sides and having the shape of concentric equilateral triangles.

2. "Advance-warning triangle" sign according to claim 1, **characterised in that** the foldable tripod (1) is manufactured from light metal, for instance aluminium.

3. "Advance-warning triangle" sign according to claim 1, **characterised in that** the foldable tripod (1) is manufactured from polymer.

4. "Advance-warning triangle" sign according to claim 1, **characterised in that** the foldable tripod (1) is manufactured from a combination of light metal and polymer.

5. "Advance-warning triangle" sign according to claim 1, **characterised in that** the legs (2) are covered with light porous rubberised material on the outside.

6. "Advance-warning triangle" sign according to claim 1, **characterised in that** the light-reflecting band (6) is an elastic high-intensive light-reflecting polymer membrane with a cellular structure.

7. "Advance-warning triangle" sign according to claim 1, **characterised in that** the legs (2) of the foldable tripod (1) are provided with support stands at their lower portion.

8. "Advance-warning triangle" sign according to claim 1, **characterised in that** the legs of the foldable tripod (1) are covered with light-reflecting material.

9. "Advance-warning triangle" sign according to any of the preceding claims, **characterised in that** the rails (9) have axles (10), and on the legs (2) are formed semicircular eyes (11) with an aperture, into which the axles (10) of the rails (9) are inserted.

## Patentansprüche

1. Warndreieck, ausgebildet als Dreifuß (1), mit zwei lateralen Seiten und einer Vorderseite, das in entfaltetem Zustand eine Pyramide mit Rippen bildet, die wenigstens an ihren oberen Enden miteinander verbunden sind und von einer elastischen Hülle eingerahmt werden, die in Form von lichtreflektierenden elastischen Bändern ausgebildet ist, die im entfalteten Zustand der Pyramide dreieckige Verkehrsschilder bilden, wobei die Rippen Teleskopständer (2) bilden, die durch Scharniere miteinander verbunden sind, wobei für eine Fixierung der vollständig entfalteten Ständer (2) ein Fixiersteg (15) vorgesehen ist, **dadurch gekennzeichnet, dass**
- die lichtreflektierenden elastischen Bänder an zwei lateralen Seiten des Dreifußes (1) an den Ständern (2) angebracht sind und einen roten Polymergeweberand bilden, der aus einem äußeren lichtreflektierenden Band (6) sowie einem inneren fluoreszierenden Band (7) besteht, die auf drei Seiten einen hohlen Mittelpunkt (8) umgeben und als konzentrische gleichseitige Dreiecke ausgebildet sind,
- an der Vorderseite des Dreifußes (1) Schienen (9) an den Ständern (2) angebracht sind, die in einer vertikalen Ebene senkrecht zu der Ebene der Straße gebogen und in dieser Position fixiert werden können, wobei die Schienen (9) an ihrem unteren Abschnitt an den Ständern (2) angebracht sind,
- die Schienen (9) an ihren oberen Enden miteinander verbunden sind und die Schienen (9) an ihrem oberen Abschnitt durch einen Befestigungsmechanismus (14) mit den Ständern (2) verbunden sind,
- ein elastisches Polymergewebeband an den Schienen angebracht ist, das als roter Rand ausgebildet ist, der aus einem äußeren lichtreflektierenden Band (6) und einem inneren fluoreszierenden Band (7) besteht, die den hohlen Mittelpunkt (8) auf drei Seiten umgeben und als konzentrische gleichseitige Dreiecke ausgebildet sind.

2. Warndreieck nach Anspruch 1, **dadurch gekennzeichnet, dass** der faltbare Dreifuß (1) aus Leichtmetall, beispielsweise Aluminium, hergestellt ist.

3. Warndreieck nach Anspruch 1, **dadurch gekennzeichnet, dass** der faltbare Dreifuß (1) aus Polymer hergestellt ist.

4. Warndreieck nach Anspruch 1, **dadurch gekennzeichnet, dass** der faltbare Dreifuß (1) aus einer Kombination aus Leichtmetall und Polymer hergestellt ist.

5. Warndreieck nach Anspruch 1, **dadurch gekennzeichnet, dass** die Ständer (2) außen mit einem leichten, porösen, gummierten Material bedeckt sind.

6. Warndreieck nach Anspruch 1, **dadurch gekennzeichnet, dass** das lichtreflektierende Band (6) eine elastische, hochintensive, lichtreflektierende Polymermembran mit Zellstruktur ist.

7. Warndreieck nach Anspruch 1, **dadurch gekennzeichnet, dass** die Ständer (2) des faltbaren Dreifußes (1) an ihrem unteren Abschnitt mit Stützen versehen sind.

8. Warndreieck nach Anspruch 1, **dadurch gekennzeichnet, dass** die Ständer des faltbaren Dreifußes (1) mit lichtreflektierendem Material bedeckt sind.

9. Warndreieck nach einem der vorhergehenden Ansprüche, **dadurch gekennzeichnet, dass** die Schienen (9) Achsen (10) haben und an den Ständern (2) halbkreisförmige Ösen (11) mit einer Öffnung ausgebildet sind, in die die Achsen (10) der Schienen (9) eingefügt werden.

## Revendications

1. Panneau « triangle de pré signalisation » sous la forme d'un trépied (1), ayant deux côtés latéraux et un côté avant, qui forme à l'état déplié une pyramide avec des nervures reliées entre elles par au moins leurs extrémités supérieures et entourées par une enveloppe élastique sous forme de rubans élastiques réfléchissant la lumière, qui forment à l'état déplié de la pyramide des panneaux de signalisation d'une forme triangulaire, dans lequel les nervures forment des pieds (2) télescopiques reliés entre eux par charnière, dans lequel pour une fixation des pieds (2) complètement dépliés il est doté d'une entretoise de fixation (15), **caractérisé en ce que**
- les rubans élastiques réfléchissant la lumière sont fixés aux pieds (2) sur deux côtés latéraux du trépied (1) et forment une bordure de tissu polymère rouge constituée d'une bande réfléchissant la lumière extérieure (6) et d'une bande fluorescente interne (7) entourant un centre creux (8) sur trois côtés et ayant la forme de triangles équilatéraux concentriques.
- sur le côté avant du trépied (1), des rails (9) sont fixés aux pieds (2), qui peuvent être inclinés dans un plan vertical perpendiculaire au plan de la route et fixés dans cette position, dans lequel les rails (9) sont fixés aux pieds (2) par leur partie inférieure,
- les rails (9) sont reliés entre eux par leurs extrémités supérieures et, au niveau de leur partie supérieure, les rails (9) sont reliés aux pieds (2) par un mécanisme de fixation (14),
- une bande de tissu polymère élastique est attachée aux rails, sous la forme d'une bordure rouge constituée d'une bande réfléchissant la lumière extérieure (6) et d'une bande fluorescente intérieure (7), entourant le centre creux (8) sur trois côtés et ayant la forme de triangles équilatéraux concentriques.

2. Panneau « triangle de pré signalisation » selon la revendication 1, **caractérisé en ce que** le trépied (1) pliable est fabriqué à partir d'un métal léger, par exemple l'aluminium.

3. Panneau « triangle de pré signalisation » selon la revendication 1, **caractérisé en ce que** le trépied (1) pliable est fabriqué à partir d'un polymère.

4. Panneau « triangle de pré signalisation » selon la revendication 1, **caractérisé en ce que** le trépied (1) pliable est fabriqué à partir d'une combinaison de métal léger et de polymère.

5. Panneau « triangle de pré signalisation » selon la revendication 1, **caractérisé en ce que** les pieds (2) sont recouverts à l'extérieur d'un matériau caoutchouté léger et poreux.

6. Panneau « triangle de pré signalisation » selon la revendication 1, **caractérisé en ce que** la bande réfléchissant la lumière (6) est une membrane de polymère élastique réfléchissant la lumière à haute intensité avec une structure cellulaire.

7. Panneau « triangle de pré signalisation » selon la revendication 1, **caractérisé en ce que** les pieds (2) du trépied (1) pliable sont munis de plateformes d'appui (5) au niveau de leur partie inférieure.

8. Panneau « triangle de pré signalisation » selon la revendication 1, **caractérisé en ce que** les pieds du trépied (1) pliable sont recouverts d'un matériau réfléchissant la lumière.

9. Panneau « triangle de pré signalisation » selon l'une quelconque des revendications précédentes, **caractérisé en ce que** les rails (9) présentent des axes (10), et sur les pieds (2) sont formés des yeux semi-circulaires (11) avec une ouverture, dans lesquels sont insérés les axes (10) des rails (9).
